# EUROPÄISCHE PATENTANMELDUNG

(11) **EP 3 904 407 A1**
(43) Veröffentlichungstag der Anmeldung: **03.11.2021**
(21) Anmeldenummer: 20171697.4
(22) Anmeldetag: 28.04.2020
(51) Int. Cl.: C08F 220/14, C08F 265/06, C08K 5/17, C08K 5/31, C09J 4/00, C09J 4/06

(54) **STABILISATOREN FÜR BESONDERS LAGERSTABILE REAKTIONSHARZE AUF (METH)ACRYLATBASIS MIT SAUREN HAFTVERMITTLERN**

(71) Anmelder: Röhm GmbH, 64295 Darmstadt (DE)
(72) Erfinder: Die Erfindernennung liegt noch nicht vor
(74) Vertreter: Röhm Patent Association

(57) **Zusammenfassung**

Die vorliegende Erfindung betrifft radikalisch härtende (Meth)acrylatharze enthaltend Stabilisatoren und saure Haftvermittler, wobei sich die (Meth)acrylatharze dadurch auszeichnen, dass diese eine besonders hohe Lagerstabilität auch bei höheren Temperaturen aufweisen und gleichzeitig die Aktivität des im (Meth)acrylatharz enthaltenen Beschleunigers erhöht wird. Die speziellen Stabilisatoren erhöhen die Lagerstabilität, erzeugen eine schnelle Härtungsgeschwindigkeit, machen die Härtungseigenschaften unempfindlich gegen die gleichzeitig vorliegenden sauren Haftvermittler. Dadurch wird eine sehr gute Haftung auf einer Vielzahl von Materialien ermöglicht und damit ein breiteres Anwendungsgebiet eröffnet. Der Begriff (Meth)acrylatharze, wie er hierin verwendet wird, umfasst alle Acrylat- und Methacrylatharze.

## Beschreibung

### Gebiet der Erfindung

Die vorliegende Erfindung betrifft radikalisch härtende (Meth)acrylatharze enthaltend Stabilisatoren und saure Haftvermittler, wobei sich die (Meth)acrylatharze dadurch auszeichnen, dass diese eine besonders hohe Lagerstabilität auch bei höheren Temperaturen aufweisen und gleichzeitig die Aktivität des im (Meth)acrylatharz enthaltenen Beschleunigers erhöht wird. Die speziellen Stabilisatoren erhöhen die Lagerstabilität, erzeugen eine schnelle Härtungsgeschwindigkeit, machen die Härtungseigenschaften unempfindlich gegen die gleichzeitig vorliegenden sauren Haftvermittler. Dadurch wird eine sehr gute Haftung auf einer Vielzahl von Materialien ermöglicht und damit ein breiteres Anwendungsgebiet eröffnet. Der Begriff (Meth)acrylatharze, wie er hierin verwendet wird, umfasst alle Acrylat- und Methacrylatharze.

### Stand der Technik

Aus dem Stand der Technik sind zahlreiche (Meth)acrylatharze bekannt, welche die unterschiedlichsten Zusammensetzungen aufweisen, um für unterschiedlichste Anwendungsbereiche geeignet zu sein. Typische Anwendungsbereiche für (Meth)acrylatharze umfassen Bodenbeschichtungen, Dach- oder Brückenbeschichtungen, Metallbeschichtung wie Korrosionsschutz- oder Intumeszenzbeschichtungen sowie Kleb- und Dichtstoffe. (Meth)acrylatharze werden dazu nach ihrer Herstellung oftmals über weite Wegstrecken transportiert. Insbesondere im internationalen Seetransport kommt es dabei zu langen Transportdauern. (Meth)acrylatharze werden in der Regel nicht direkt nach ihrer Herstellung angewendet und müssen deshalb über längere Zeit ausreichend lagerstabil sein. Eine ausreichende Lagerstabilität von (Meth)acrylatharzen, auch bei höheren Temperaturen, ist vorteilhaft, um die Anforderungen bei Lagerung und Transport gering zu halten, wie beispielsweise einen temperaturkontrollierten Transport oder eine Lagerung gekühlten Lagerräumen. Auch unter Sicherheitsaspekten ist eine hohe Lagerstabilität wünschenswert, um eine unkontrollierte Polymerisation bei der Herstellung und Lagerung zu vermeiden.
Entsprechende Zusätze zu den (Meth)acrylatharzen, wie Vernetzungsmittel, Paraffine, Stabilisatoren, Haftvermittler oder dergleichen können die Eigenschaften des (Meth)acrylatharzes gezielt verbessern.

US4145477, EP1152014 , US4076671 , US4596857 , GB1083486 , und DE19848483 offenbaren (Meth)acrylatharz welches (Meth)acrylatmonomere, mindestens ein in (Meth)acrylaten lösliches Polymer, und Paraffin umfasst. Um eine ausreichende Haftung auf Untergründen wie Metall oder Keramik zu erlangen werden in solchen Systemen insbesondere saure Haftvermittler in (Meth)acrylatharzen eingesetzt.

DE 102007034458A1 offenbart radikalisch härtende (Meth)acrylatharze für Intumeszenzbeschichtungen enthaltend copolymerisierbare Säuren, z.B. auf Basis von (Meth)acrylaten, wie z.B. beta-Carboxyethylacrylat, als Haftvermittler. Diese radikalisch härtenden (Meth)acrylatharze zeigen bei Verwendung von beta-Carboxyethylacrylat eine hohe Lagerstabilität, jedoch gleichzeitig eine nur eingeschränkte Haftungswirkung. Insbesondere zeigen sich bei einem Zusatz von mehrfunktionellen (Meth)acrylaten als Vernetzer unzureichende Haftungsergebnisse.

EP 14 690 21 offenbart radikalisch härtende (Meth)acrylatharze, welche Methacryloyloxyethylphosphat als Haftvermittler aufweisen. Diese (Meth)acrylatharze zeigen eine gute Haftung auf einer Vielzahl von Untergründen, jedoch keine hohe Lagerstabilität, insbesondere nicht bei höheren Temperaturen.

WO 2015/143005 offenbart radikalisch härtende (Meth)acrylatharze, welche Methacryloyloxyethylphosphat als Haftvermittler sowie einen Co-Beschleuniger enthalten. Die beschriebenen Co-Beschleuniger dienen zur Erhöhung der Aktivität des enthaltenen Beschleunigers, der auch als Reduktionsmittel bezeichnet wird. Als wirksame Co-Beschleuniger werden hierbei bizyklischen Diazaverbindungen, wie 1,4- Diazabicyclo[2.2.2]octan (DABCO), vorgeschlagen. Diese bizyklischen Diazaverbindungen zeigen eine Wirkung als Co-Beschleuniger und eine gute Haftung auf einer Vielzahl von Untergründen, jedoch zeigen insbesondere schnellhärtende, reaktive (Meth)acrylatharze mit Haftvermittlern wie Methacryloyloxyethylphosphat nur eine unbefriedigende Langzeitlagerstabilität mit den offenbarten Co-Beschleunigern.

Es besteht also ein großes Interesse daran, neuartige (Meth)acrylatharze zur Verfügung zu stellen, die sowohl auf einer Vielzahl von Substraten applizierbar und dabei langfristig gut haftend sind, und gleichzeitig auch bei höheren Temperaturen für längere Zeit lagerstabil sind.

### Aufgabe

Der vorliegenden Erfindung lag damit die Aufgabe zugrunde, ein neuartiges Reaktionsharz auf (Meth)acrylatbasis, welches sowohl lagerstabil ist als auch gute Haftungseigenschaften auf verschiedenen Untergründen zeigt, zur Verfügung zu stellen.

Darüber hinaus bestand die Aufgabe ein solches Basis-Reaktionsharz, welches durch entsprechende jeweilige Formulierungen in einer Vielzahl verschiedener Anwendungen eingesetzt werden kann, zu entwickeln.

Insbesondere bestand dabei die Aufgabe Reaktionsharze, enthaltend saure Haftvermittler, derart zu optimieren, dass die sauren Haftvermittler in (Meth)acrylatharzen eingesetzt werden können und die Nachteile des Stands der Technik trotzdem überwunden werden bzw. die resultierenden (Meth)acrylatharze gegenüber dem Stand der Technik besonders lagerstabil sind und ein hohes Haftungsvermögen auf einer Vielzahl von Substraten aufweisen.

Weitere nicht explizit aufgeführte Aufgaben können sich aus dem Stand der Technik, der Beschreibung, den Beispielen oder dem Gesamtzusammenhang der Anmeldung ergeben.

### Beschreibung

Die Aufgabe wurde gelöst durch ein neuartiges Reaktionsharz, welches mindestens ein (Meth)acrylat, mindestens ein Polymer und/oder Urethan(meth)acrylat, mindestens einen Haftvermittler, aufweisend mindestens eine Säuregruppe, und mindestens eine nicht nucleophile Base, im weiteren als Stabilisator bezeichnet, aufweist.

Die nucleophile Base kann dabei verschiedene Funktionen haben, die sich auch in den für diese Komponente verwendbaren Bezeichnungen wiederspiegelt. Die Bezeichnung als Stabilisator spiegelt die Wirkung bezüglich einer verbesserten Lagerstabilität des Reaktionsharzes wieder. Zur klaren Unterscheidbarkeit werden andere stabilisierend wirkende Zusatzstoffe, wie z.B. UV-Stabilisatoren, im weiteren nicht mit dem Begriff Stabilisator bezeichnet.

Bevorzugt handelt es sich bei diesem Reaktionsharz um ein (Meth)acrylatharz, das als Stabilisator mindestens eine, nicht nucleophile Aminbase enthält. Bevorzugt ist diese Aminbase dabei eine nichtzyklische Aminbase, d.h. die Amingruppe ist nicht Bestandteil eines Rings.

Bevorzugt weist das (Meth)acrylatharz folgende Inhaltsstoffe auf:
10 Gew% bis 96,1 Gew%, bevorzugt 30 Gew% bis 80 Gew%, besonders bevorzugt 40 Gew% bis 70 Gew% (Meth)acrylatmonomere und optional mit (Meth)acrylaten copolymerisierbare Komponenten,
0,5 Gew% bis 30 Gew%, bevorzugt 1 Gew% bis 20 Gew%, besonders bevorzugt 1,5 Gew% bis 10 Gew% Vernetzer, bevorzugt Di-, Tri- oder Tetra-(meth)acrylate,
3 Gew% bis 40 Gew%, bevorzugt 15 Gew% bis 35 Gew%, besonders bevorzugt bis 25 Gew% Polymere, bei denen es sich bevorzugt um Poly(meth)acrylate und/oder Polyester, besonders bevorzugt um Poly(meth)acrylate handelt,
0 Gew% bis 60 Gew%, bevorzugt bis 30 Gew% Urethan(meth)acrylate,
0,1 Gew% bis 5 Gew%, bevorzugt 0,5 Gew% bis 1,5 Gew%, aromatisches tertiäres Amin als Beschleuniger,
0,1 Gew% bis 3 Gew%, bevorzugt 0,1 Gew% bis 1,0 Gew%, besonders bevorzugt 0,1 Gew% bis 0,5 Gew%, ganz besonders bevorzugt 0,2 Gew% bis 0,5 Gew% mindestens einer nichtzyklischen, nicht nucleophilen Aminbase,
0,05 Gew% bis 5 Gew%, besonders bevorzugt 0,2 - 0,6 Gew% Haftvermittler bei denen es sich bevorzugt um einen Phosphorsäureester, insbesondere 2-Hydroxyethylmethacrylatphosphat handelt.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen. Als Bestandteile von Monomergemischen eignen sich auch zusätzliche Monomere mit einer weiteren funktionellen Gruppe, wie a,ß-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole. Im Einzelnen wird das Poly(meth)acrylat nach Anteil und Zusammensetzung zweckmäßigerweise im Hinblick auf die gewünschte techische Funktion gewählt werden.

Ein weiterer Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat.

In sogenannten MO-PO-Systemen liegen neben den aufgeführten Monomeren auch Polymere, zur besseren Unterscheidbarkeit im Rahmen dieses Schutzrechtes auch als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Der Präpolymeranteil des Reaktionsharzes liegt dabei zwischen 10 Gew% und 40 Gew%, bevorzugt zwischen 15 Gew% und 35 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt. Besagte Polyester werden in Substanz via Polykondensation oder ringöffnende Polymerisation gewonnen und setzen sich aus den für diese Anwendungen bekannten Bausteinen zusammen.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685 . Ein kommerziell erhältliches Beispiel hergestellt aus Polyolen, Isocyanaten und hydroxyfunktionellen (Meth)acrylaten ist EBECRYL 230-Allnex. Urethan(meth)acrylate erhöhen in einem Reaktionsharz, ohne größere Temperaturabhängigkeit, die Flexibilität, die Reißfestigkeit und die Reißdehnung. Dies hat auf die Beschichtung in zweierlei Hinsicht einen Einfluss: Die Temperaturstabilität der Beschichtung nimmt zu und die Nachteile eines, bedingt durch den höheren Vernetzergehalt, höheren Vernetzungsgrades bezüglich Versprödung und Haftung gegenüber der Oberfläche können ausgeglichen werden oder sogar verbessert werden. Das erfindungsgemäße Reaktionsharz enthält in einer Ausführungsform mit Urethan(meth)acrylaten zwischen 5 Gew% und 60 Gew%, bevorzugt zwischen 10 Gew% und 30 Gew% der beschriebenen Urethan(meth)acrylate.
Die Urethan(meth)acrylate weisen dazu bevorzugt ein Molekulargewicht M_{w} größer 800 g/mol, insbesondere größer/gleich 2000 g/mol auf.

Initiierungssysteme, die in den bevorzugten (Meth)acrylatharzen verwendet werden können, sind wohlbekannte Redoxsysteme und müssen hier nicht ausführlich erörtert werden. Grundsätzlich umfassen solche Systeme mindestens ein Oxidationsmittel und mindestens ein Beschleuniger bzw. Reduktionsmittel, die bei schon bei Umgebungstemperatur miteinander reagieren, um freie Radikale zu erzeugen, die wirksam sind, um Polymerisationsreaktionen zu initiieren. In einer alternativen Nomenklatur kann das Oxidationsmittel auch als Initiator und der Beschleuniger als Reduktionsmittel bezeichnet werden. Erfindungsgemäß kann eine im Stand der Technik bekannte Kombination aus Oxidations- und Reduktionsmittel eingesetzt werden, die derart zusammenwirken. Beispiele für besonders geeignete Oxidationsmittel bzw. initiatoren umfassen ohne Einschränkung organische Peroxide wie Benzoylperoxid, Dilauroylperoxid und andere Diacylperoxide, Hydroperoxide wie Cumolhydroperoxid, Perester wie t-Butylperoxybenzoat; Ketonhydroperoxide wie Methylethylketonhydroperoxid, organische Salze von Übergangsmetallen wie Cobaltnaphthenat. In einer bevorzugten Ausführungsform der vorliegenden Erfindung umfasst das Oxidationsmittel ein organisches Peroxid, am meisten bevorzugt Benzoylperoxid (BPO).

In der bevorzugten Ausführungsform der vorliegenden Erfindung umfasst der Beschleuniger ein aromatisches tertiäres Amin. Repräsentative Beschleuniger umfassen mindestens eines von N, N-Dimethyl-p-anilin (DMA); N,N-Dimethyl-p-toluidin (DMPT); N-(2-Hydroxyethyl)-N-methyl-p-toluidin (MHPT); N,N-Diethyl-p-toluidin (DEPT); ethoxyliertes N,N-Diethyl-p-toluidine (eDEPT); N,N-Diisopropanol-p-toluidin (DIPT); N,N-Diisopropanol-p-Chloranilin; N,N-Diisopropanol-p-Bromanilin; N,N-Diisopropanol-p-Brom-m-methylanilin; N, N-Dimethyl-p-chloranilin; N, N-Dimethyl-p-bromanilin; N, N-Diethyl-p-chloranilin; N, N-Diethyl-p-bromanilin; oder andere p-halogenierte Anilinderivate.

In einer Ausführungsform der vorliegenden Erfindung liegt der Beschleuniger im Bereich von 0,05 bis 10 Gew%, vorzugsweise etwa 0,1 bis etwa 6,0 Gew%, der polymerisierbaren (Meth)acrylatharzzusammensetzung vor. In einer am meisten bevorzugten Ausführungsform der vorliegenden Erfindung umfasst der Beschleuniger DIPT und das Oxidationsmittel Benzoylperoxid.

In der erfindungsgemäßen Ausführungsform der vorliegenden Erfindung umfasst die (Meth)acrylatharzzusammensetzung einen Stabilisator. Der Stabilisator unterscheidet sich von dem Beschleuniger / Reduktionsmittel, da er die Zersetzung des Oxidationsmittels nicht beschleunigt und daher die Härtung der Zusammensetzung allein nicht erleichtert. Wenn er jedoch mit einem Beschleuniger wie oben erwähnt verwendet wird, wird der Stabilisator die Reaktivität des Systems verbessern. In einer bevorzugten Ausführungsform der vorliegenden Erfindung umfasst Stabilisator, nicht nucleophile Aminbase wie 1,1,3,3-Tetramethylguanidin (TMG), N,N-Diisopropylethylamin (DIPEA), N,N'-Di-o-tolylguanidin (DOTG) oder Tributylamin (TBA). In einer am meisten bevorzugten Ausführungsform der vorliegenden Erfindung umfasst der Stabilisator 1,1,3,3-Tetramethylguanidin (TMG). Besonders bevorzugt handelt es sich bei der nicht nucleophilen Aminbase um ein nichtzyklisches, nicht nukleophiles Amin, wobei nicht zyklisch in diesem Zusammenhang ein Amin beschreibt, bei dem mindestens eine Amingruppe nicht Bestandteil eines Zyklus ist. Eine solche Verbindung kann dabei durchaus zyklische Substituenten aufweisen.

Bevorzugt liegt der Stabilisator in einer Konzentration von 0,10 bis 3,0 Gew %, bezogen auf das Gesamtgewicht der (Meth)acrylatharzzusammensetzung, vor.

In der vorliegenden Erfindung wird der Acrylzusammensetzung weiterhin ein Haftvermittler zugesetzt. Bei den Haftvermittlern, die auch als Adhäsionspromotoren genannt werden können, kann es sich insbesondere um allgemein für diesen Zweck beschriebene phosphorhaltige Verbindungen wie Monoester der Phosphinsäure, Mono- und Diestern von Phosphon- und Phosphorsäuren mit mindestens einem Substituenten, der eine Vinyl- oder Allyl-Gruppe aufweist. Dabei sind Vinylgruppen bevorzugt. Spezifische Beispiele für solche phosphorhaltigen Haftvermittler sind 2-Methacryloyloxyethylphosphat, Bis-(2-methacryloxyoxyethyl) phosphat, 2-Acryloyloxyethylphosphat, Bis-(2-acryloyloxyethyl) phosphat, Methyl-(2-methacryloyloxyethyl)phosphat, Ethylmethacryloyloxyethylphosphat, Methylacryloyloxyethylphosphat, Ethylacryloyloxyethylphosphat, Propylacryloyloxyethylphosphat, Isobutylacryloyloxyethylphosphat, Ethylhexylacryloyloxyethylphosphat, Halogenpropylacryloyloxyethylphosphat, Haloisobutylacryloyloxyethylphosphat oder Halogenethylhexylacryloyloxyethylphosphat handeln. Alternativ können auch Vinylphosphonsäure, Cyclohexen-3-phosphonsäure, a-Hydroxybuten-2-phosphonsäure, 1-Hydroxy-1-phenylmethan-1,1-diphosphonsäure, 1-Hydroxy-1-methyl-1-disphosphonsäure, 1-Amino-1-phenyl-1,1-diphosphonsäure, 3-Amino-3-hydroxypropan-1,1-disphosphonsäure, Aminotris(methylenphosphonsäure), gamma-Aminopropylphosphonsäure, gamma-Glycidoxypropylphosphonsäure, Phosphorsäuremono-2-aminoethylester, Allylphosphonsäure, Allylphosphinsäure, β-Methacryloyloxyethylphosphinsäure; Diallylphosphinsäure; 3-Methacryloyloxyethyl) phosphinsäure und Allylmethacryloyloxyethylphosphinsäure eingesetzt werden. Darüber hinaus sind auch Kombinationen aus zwei oder mehreren diese Haftvermittler möglich. Ein bevorzugter Haftvermittler ist 2-Hydroxyethylmethacrylatphosphat (HEMA-Phosphat). Weitere alternative, wenn auch weniger bevorzugte Haftvermittler sind beta-CEA oder Methacrylsäure. Vielen, aber nicht zwingend allen Haftvermittlern ist gemein, dass sie durchaus während der Aushärtung des Reaktionsharzes copolymerisiert werden können. Es ist auch denkbar eine Kombination aus einem oder verschiedenen copolymerisierbaren und nicht polymerisierbaren Haftvermittlern einzusetzen.

Die als Stabilisator wirksame nichtzyklische starke Aminbase kann auch vor Herstellung des (Meth)acrylatharzes mit sauren Haftvermittlern wie 2-Hydroxyethylmethacrylatphosphat vermischt werden. Die Mischung aus Stabilisator und sauren Haftvermittler kann im Anschluss einem Reaktionsharz hinzugefügt werden. Durch diese Ausführung können Reaktionsharze nach der Herstellung nachträglich mit einem Haftvermittler ausgestattet werden.

Als Hilfs- und Zusatzstoffe können zusätzlich Regler, Weichmacher, Paraffine, zusätzliche stabilisierend wirkende Zuschlagsstoffe, wie beispielsweise sterisch gehinderte Phenole, Inhibitoren, Wachse und/oder Öle eingesetzt werden. Bei den zusätzlichen stabilisierend wirkenden Zuschlagsstoffen handelt es sich nicht um teile oder Alternative zu den erfindungsgemäß eingesetzten Stabilisatoren. Vielmehr handelt es sich hierbei um übliche Zuschlagsstoffe wie UV- oder Oxidations-Stabilisatoren.

Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als optional enthaltene Regler können alle aus der radikalischen Polymerisation bekannten Verbindungen verwendet werden. Bevorzugt werden Mercaptane wie n-Dodecylmercaptan eingesetzt. Als optional zugegebene Weichmacher werden vorzugsweise Ester, Polyole, Öle, niedermolekulare Polyether oder Phthalate eingesetzt.
Optional zugegebene Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Weiterhin sei noch ausgeführt, dass Reaktionsharze, wie zum Beispiel auch die erfindungsgemäßen Reaktionsharze, in der Regel als 2K-System gelagert und angewendet wird. Dazu gibt es zwei unterschiedliche Komponenten, die vor der Applikation vermischt werden und innerhalb einer systemspezifischen Topfzeit appliziert wird. Diese Topfzeit liegt beispielsweise in einer Größenordnung von 20 min, kann aber auch kürzer oder relevant länger, von bis zu 60 min, sein. In einem solchen 2K-System enthält die eine Komponente den Initiator und die andere den Beschleuniger. Bevorzugt befindet sich der Stabilisator dann in beiden Fraktionen oder in der gleichen Fraktionen wie der Beschleuniger. Weiterhin kann das eigentliche Reaktionsharz auf beide Komponenten aufgeteilt sein oder eine Komponente besteht nur aus den Aktivkomponenten Initiator oder Beschleuniger (sowie optional Stabilisator). Insgesamt sind die Möglichkeiten zur Ausgestaltung einer 2K-Systems allgemein aus dem Stand der Technik bekannt.

Weitere Merkmale und Vorteile der vorliegenden Erfindung werden im Folgenden veranschaulichend anhand von Beispielen erläutert, die jedoch nicht beabsichtigt sind, um den Schutzumfang in irgendeiner Form zu beschränken. Sofern nicht anders angegeben, beziehen sich alle Gew%-Angaben auf das (Meth)acrylatharz.

### Beispiele

### Herstellung eines Amin-freien Methacrylatharzes in Anlehnung an EP 146 90 21

### (Bezeichnung im Folgenden mit Basisharz):

Basisharz für weitere Versuche wurde hergestellt durch Mischen der folgenden Komponenten:

| **Stoffname/Material** | **Einwaage** |
|---|---|
| Methylmethacrylat | 1577,0 g |
| Copolymer aus Methylmethacrylat und Butylmethacrylat (Degalan LP 64/12, Copolymer aus 60% Butylmethacrylat, 40% Methylmethacrylat und Methacrylsäure mit einem Molekulargewicht von 60.000 g/mol) | 1650,0 g |
| Ethylenglykoldimethacrylat | 100,0 g |
| Paraffin (Erweichungspunkt 46 bis 48°C) | 15,0 g |
| Paraffin (Erweichungspunkt 52 bis 54°C) | 15,0 g |
| Paraffin (Erweichungspunkt 63 bis 66°C) | 10,0 g |
| Co-Stabilisator (Alkanox 240; Alkanox 240 ist Tri-(2,4-di-tert-butyl-phenyl)phosphit) | 25,0 g |
| 2,6-Ditert.-butyl-4-methylphenol | 3,0 g |
| 2-Hydroxyethylmethacrylat | 1500,0 g |
| Methacryloyloxyethylphosphat | 15,0 g |
| Entschäumer (BYK 052, erhältlich von BYK Chemie) | 25,0 g |
| Summe | 4935,0 g |

Mit dem hergestellten Basisharz wurde durch Zusatz verschiedener Beschleuniger- und Stabilisator-Mengen weitere Methacrylatharze hergestellt:

| **Beispiel** | **Basisharz** | **Beschleuniger** | **Co-Aktivator** | **Sonstiges** | **Gesamt** |
|---|---|---|---|---|---|
| Vergleichsbeispiel 1 | 592,2 g | 4,8 g DIPT | - | 3,0 g MMA | 600 g |
| Vergleichsbeispiel 2 | 592,2 g | 4,8 g DIPT | 3,0 g DABCO | - | 600 g |
| Beispiel 3 | 592,2 g | 4,8 g DIPT | 3,0 g TMG | - | 600 g |
| Vergleichsbeispiel 4 | 592,2 g | 4,8 g DMPT | - | 3,0 g MMA | 600 g |
| Beispiel 5 | 592,2 g | 4,8 g DMPT | 3,0 g TMG | - | 600 g |
| Nichterfindungsgemäßes Vergleichsbeispiel 6 | 592,2 g | 4,8 g MHPT | - | 3,0 g MMA | 600 g |
| Erfindungsgemäßes Beispiel 7 | 592,2 g | 4,8 g MHPT | 3,0 g TMG | - | 600 g |

### Abkürzungen

### Beschleuniger

DIPT: N,N-Diisopropanol-p-toluidin
DMPT: N,N-Dimethyl-p-toluidin
MHPT: N-(2-Hydroxyethyl)-N-methyl-p-toluidin

### Co-Aktivatoren (Stabilisatoren)

DABCO: 1,4- Diazabicyclo[2.2.2]octan
TMG: 1,1,3,3-Tetramethylguanidin

### Härtungsversuche

Zu 100 Gewichtsteilen der hergestellten Methacrylatharze werden zur Aushärtung 2 Gewichtsprozent Härterpulver (50% BPO in Dicyclohexylphthalat) beigemischt, für zwei Minuten gerührt und dann in ca. 2 mm Schichtdicke auf eine Metalloberfläche aufgetragen bzw. in die o.g. Prüfbecher gegossen.

Zur Ermittlung der Topfzeit wurde diejenige Zeit ermittelt, die das Material nach Einrühren des Härters benötigt um sich selbst von Raumtemperatur (20-22 °C) auf 32 °C zu erwärmen.
Zur Ermittlung der Temperaturmaxima (Tₘₐₓ) wurde diejenige Zeit ermittelt, die 20 g Harz in einem PE-Becher mit 45mm Durchmesser benötigen um das Temperaturmaximum während der Aushärtung zu erreichen.

Die Zeit bis zum Bestehen des Oberflächentestes (O-Test) wird als diejenige Zeit bestimmt, ab der die Oberfläche der in 2 mm ausgegossenen Harzschicht klebfrei ausgehärtet ist.

### Ermittlung Lagerstabilität bei 50 °C

Je 90 ml hergestellten Methacrylatharze wurden zur Überprüfung der Lagerstabilität in 100 mL fassende Glasflaschen gefüllt. Die Glasflaschen wurden verschlossen und bei 50 °C einem Wärmeschrank gelagert. Die Stabilität der Methacrylatharze wurde mehrmals täglich visuell überprüft.

### Ermittlung Lagerstabilität bei 90 °C

Je 90 ml hergestellten Methacrylatharze wurden zur Überprüfung der Lagerstabilität in 100 mL fassende Glasflaschen gefüllt. Die Glasflaschen wurden verschlossen und bei 90 °C einem Wärmeschrank gelagert. Die Stabilität der Methacrylatharze wurde mehrmals täglich visuell überprüft.

### Ergebnisse Wirkung Stabilisator

| **Beispiel** | **Beschleuniger** | **Stabilisator** | **Topfzeit** | **O-Test** | **Tmax** |
|---|---|---|---|---|---|
| Vergleichsbeispiel 1 | DIPT | - | 40 min | 120 min | 43 min / 138 °C |
| Vergleichsbeispiel 2 | DIPT | DABCO | 6 min | 12 min | 9 min / 130 °C |
| Beispiel 3 | DIPT | TMG | 5 min | 10 min | 8 min / 156 °C |
| Vergleichsbeispiel 4 | DMPT | - | 8 min | 14 min | 9 min / 148 °C |
| Beispiel 5 | DMPT | TMG | 2,5 min | 6 min | 5 min / 140 °C |
| Vergleichsbeispiel 6 | MHPT | - | 12 min | 25 min | 15 min / 143 °C |
| Beispiel 7 | MHPT | TMG | 3 min | 6 min | 4 min / 150 °C |

Die schnelle Aushärtung der Harze mit Co-Aktivator lässt sich anhand schnelleren Erreichen der Maximaltemperatur Tₘₐₓ und der geringeren Zeit des O-Test erkennen.

### Ergebnisse Lagerstabilität 90 °C

| **Beispiel** | **Beschleuniger** | **Stabilisator** | **Lagerstabilität 90 °C** |
|---|---|---|---|
| Vergleichsbeispiel 1 | DIPT | - | < 3 Tage |
| Vergleichsbeispiel 2 | DIPT | DABCO | 3 Tage |
| Beispiel 3 | DIPT | TMG | 10 Tage |
| Vergleichsbeispiel 4 | DMPT | - | < 1 Tag |
| Beispiel 5 | DMPT | TMG | 10 Tage |
| Vergleichsbeispiel 6 | MHPT | - | < 1 Tag |
| Beispiel 7 | MHPT | TMG | > 5 Tage |

### Ergebnisse Lagerstabilität 50 °C

| **Beschleuniger** | **Stabilisator** | **Lagerstabilität 50 °C** |
|---|---|---|
| DMPT | - | 7 Tage |
| DMPT | TMG | 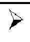 44 Tage |

Die höhere Lagerstabilität lässt sich anhand dem gegenüber Stand der Technik längeren Zeitspanne bis zur Polymerisation bei der Lagerung erkennen. Bei Verwendung des erfindungsgemäßen Co-Aktivators TMG ist eine wesentlich höhere Lagerstabilität vorhanden als Bei Verwendung des Stands der Technik Co-Aktivators DABCO.

### Beispiel 8

### Herstellen einer Lösung von Stabilisator und Haftvermittler

70 g Methacryloyloxyethylphosphat wurden mit 29,97 g MMA und 0,03 g Topanol O vermischt. Zu dieser Lösung wurden 35 g 1,1,3,3-Tetramethylguanidin (TMG) hinzugefügt. Es bildete sich unter leichter Wärmeentwicklung eine klare viskose Flüssigkeit.

100 g DEGADUR 112 (Reaktionsharz Röhm GmbH) wurden mit 0,7 g Methacryloyloxyethylphosphat versetzt und für 12 Wochen bei 50°C gelagert.

100 g DEGADUR 112 (Reaktionsharz Röhm GmbH) wurden mit 1,0 g der Lösung von Stabilisator und Haftvermittler versetzt. Das Gemisch war über 12 Wochen bei 50°C lagerstabil.

## Patentansprüche

1. Reaktionsharz, enthaltend mindestens ein (Meth)acrylat, mindestens ein Polymer und/oder Urethan(meth)acrylat, mindestens einen Haftvermittler, aufweisend mindestens eine Säuregruppe, und mindestens eine nicht nucleophile Base.

2. Reaktionsharz gemäß Anspruch 1, **dadurch gekennzeichnet, dass** es sich bei der nicht nucleophilen Base um ein nicht nucleophiles Amin handelt.

3. Reaktionsharz gemäß Anspruch 2, **dadurch gekennzeichnet, dass** es sich bei der nicht nucleophilen Base um ein Guanidin, N,N'-di-iso-Propylethylamin, ein tri-Butylamin oder Lithium-di-iso-Propylamid handelt.

4. Reaktionsharz gemäß mindestens einem der Ansprüche 1 bis 3, **dadurch gekennzeichnet, dass** es sich bei dem Haftvermittler um eine phosphorhaltige Verbindung oder um eine Mischung verschiedener phosphorhaltiger Verbindungen handelt.

5. Reaktionsharz gemäß Anspruch 4, **dadurch gekennzeichnet, dass** es sich bei der phosphorhaltigen Verbindung um 2-Hydroxyethylmethacrylatphosphat handelt. Reaktionsharz gemäß mindestens einem der Ansprüche 1 bis 5, **dadurch gekennzeichnet, dass** das Reaktionsharz 10 Gew% bis 96,1 Gew% (Meth)acrylatmonomere und optional mit (Meth)acrylaten copolymerisierbare Komponenten,
0,5 Gew% bis 30 Gew% Vernetzer,
3 Gew% bis 40 Gew% Präpolymere,
0 Gew% bis 60 Gew%, Urethan(meth)acrylate,
0,1 Gew% bis 5 Gew% Beschleuniger,
0,1 Gew% bis 3 Gew% mindestens einer nicht nucleophilen Aminbase,
0,05 Gew% bis 5 Gew% Haftvermittler aufweist.

6. Reaktionsharz gemäß Anspruch 5, **dadurch gekennzeichnet, dass** das Reaktionsharz
30 Gew% bis 80 Gew% (Meth)acrylatmonomere und optional mit (Meth)acrylaten copolymerisierbare Komponenten,
1 Gew% bis 20 Gew% di-, tri- oder tetra-(Meth)acrylate als Vernetzer,
15 Gew% bis 35 Gew%, Poly(meth)acrylate und/oder Polyester als Präpolymere,
0 Gew% bis 30 Gew% Urethan(meth)acrylate,
0,1 Gew% bis 5 Gew% aromatisches tertiäres Amin als Beschleuniger,
0,1 Gew% bis 1,0 Gew%, mindestens einer nichtzyklischen, nicht nucleophilen Aminbase,
0,05 Gew% bis 5 Gew%, mindestens eines Phosphorsäureesters als Haftvermittler, aufweist.

7. Reaktionsharz gemäß Anspruch 6, **dadurch gekennzeichnet, dass** das Reaktionsharz
40 Gew% bis 70 Gew% (Meth)acrylatmonomere und optional mit (Meth)acrylaten copolymerisierbare Komponenten,
1,5 Gew% bis 10 Gew% di-, tri- oder tetra-(Meth)acrylate,
15 Gew% bis 25 Gew% Poly(meth)acrylate als Präpolymere,
0 Gew% bis 12 Gew% Urethan(meth)acrylate,
0,5 Gew% bis 1,5 Gew%, aromatisches tertiäres Amin,
0,1 Gew% bis 0,5 Gew% mindestens einer nichtzyklischen, nicht nucleophilen Aminbase,
0,2 bis 0,6 Gew% 2-Hydroxyethylmethacrylatphosphat als Haftvermittler, aufweist.

8. Reaktionsharz gemäß mindestens einem der Ansprüche 1 bis 3, **dadurch gekennzeichnet, dass** das Reaktionsharz 0,2 Gew% bis 0,5 Gew% der nichtzyklischen, nicht nucleophilen Aminbase enthält.
